# FASCICULE DE BREVET EUROPEEN

(11) **EP 4 006 803 B1**
(45) Date de publication et mention de la délivrance du brevet: **07.01.2026**
(21) Numéro de dépôt: 20210654.8
(22) Date de dépôt: 30.11.2020
(51) Int. Cl.: G06Q 20/32, G06Q 20/38

(54) **OBJET PORTABLE DE PAIEMENT SANS CONTACT**
TRAGBARER GEGENSTAND ZUR KONTAKTLOSEN BEZAHLUNG
PORTABLE OBJECT FOR CONTACTLESS PAYMENT

(43) Date de publication de la demande: 01.06.2022
(73) Titulaire: The Swatch Group Research and Development Ltd, 2074 Marin-Epagnier (CH)
(72) Inventeur: RANDJELOVIC, Zoran, 2035 Corcelles (CH); ETIENNE, Jean-Daniel, 2206 Les Geneveys-sur-Coffrane (CH); SCORDILIS, Thierry, 2036 Cormondrèche (CH)
(74) Mandataire: ICB SA

(56) Documents cités:
- EP-A1- 3 262 586
- EP-A1- 3 343 450
- EP-A1- 3 654 113
- EP-A2- 3 458 916
- EP-B1- 3 458 916
- WO-A1-2018/133178
- US-A1- 2015 348 022

## Description

### Domaine technique de l'invention

La présente invention se rapporte à un objet portable sans contact apte à participer à la réalisation d'un paiement électronique.

### Arrière-plan technologique

On connait dans l'état de la technique des objets portables tels que des cartes de paiement qui incorporent des modules de communication en champ proche pour la réalisation d'un paiement électronique sans contact. Dans de tels objets, les modules de communication en champ proche sont composés d'une puce électronique reliée électriquement à une antenne. La plupart du temps, ces objets n'ont pas besoin d'une alimentation électrique autonome et sont destinés à communiquer automatiquement avec un lecteur dès qu'ils s'en approchent. Le champ électromagnétique du lecteur génère un courant induit dans l'antenne qui alimente la puce et lui permet d'émettre à son tour un signal via l'antenne.

Toutefois il existe un besoin de proposer une alternative aux solutions existantes notamment lorsque les utilisateurs de tels objets portables possèdent plusieurs cartes de paiement qu'ils souhaitent utiliser dans le cadre de paiements électroniques sans contact.

La demande de brevet EP 3 654 113 A1 divulgue une montre-bracelet avec un module de communication à courte distance configuré pour effectuer un paiement électronique, le module de communication à courte distance comprenant une pluralité d'éléments de sécurité correspondant chacun à un compte bancaire ou une carte de paiement de l'utilisateur, la montre-bracelet comprenant en outre un élément d'activation ou de désactivation du paiement électronique exécuté par le module de communication et un élément de sélection de l'un des éléments sécurisés.

### Résumé de l'invention

Un des buts de l'invention est de proposer un objet portable dont les caractéristiques contribuent à en améliorer l'utilisation dans le cadre de paiement électronique sans contact en rendant cette utilisation plus facile et plus sûre que les solutions de l'art antérieur.

L'invention concerne un objet portable de paiement sans contact apte à participer à la réalisation d'un paiement électronique selon la revendication 1. Les revendications dépendantes définissent des modes de réalisation avantageux de l'invention.

### Brève description des figures

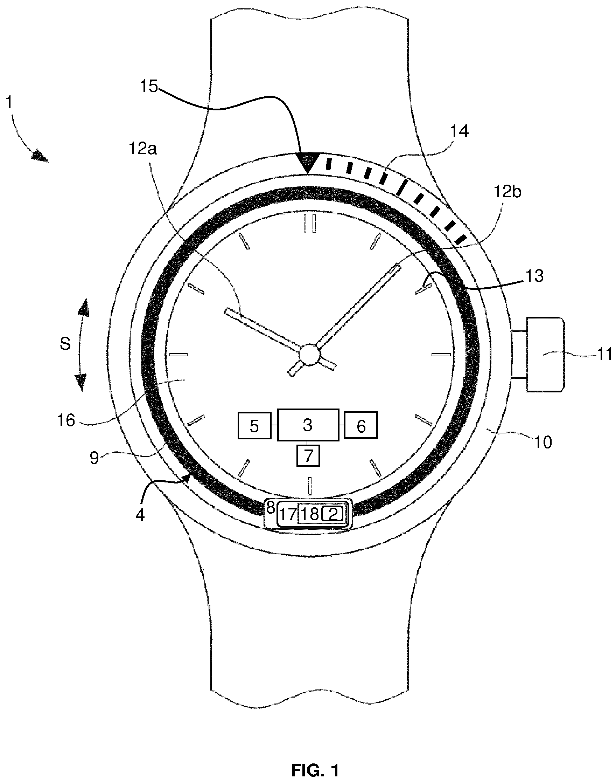

D'autres détails de l'invention apparaîtront plus clairement à la lecture de la description qui suit, faite en référence à la figure 1 annexée qui représente une vue schématique d'un objet portable de paiement sans contact comportant un dispositif de connexion en champ proche.

### Description détaillée de l'invention

La figure 1 montre une représentation schématique d'un objet portable 1 de paiement sans contact comprenant une pluralité de cartes virtuelles de paiement 2 valides. Ces cartes virtuelles de paiement 2 autrement appelées cartes bancaires dématérialisées ou encore cartes de crédit virtuelles sont chacune associées à une carte bancaire physique détenue par l'utilisateur de cet objet 1, et par extension à un compte bancaire de ce dernier. Ces cartes virtuelles de paiement 2 sont archivées dans l'objet portable 1 sous forme de données numériques par exemple des données appelées « jeton » (token en anglais) dans le cadre du paiement électronique par tokenisation. Cette tokenisation est le processus de substitution de données de paiement telles que des données bancaires (numéro de cartes, ...) par ce jeton. Autrement dit, ce processus permet de remplacer une donnée critique par un élément équivalent ici le « jeton », lequel jeton n'aura aucune valeur intrinsèque ou signification exploitable une fois sorti du système de paiement. Ces données critiques sont des données bancaires de l'utilisateur de l'objet portable 1 qui comportent de manière non limitative et non exhaustive :
- un numéro de la carte bancaire du porteur,
- une date d'expiration de la carte ;
- des données personnelles du porteur : nom, prénom, adresse, etc...
- un numéro de compte bancaire ;
- etc,

Dans ce contexte, la pluralité de cartes virtuelles de paiement 2 archivées dans l'objet portable 1 sont dites valides, validées ou encore attribuées car elles sont liées chacune à une carte bancaire physique détenue par l'utilisateur de cet objet 1. Dans ces conditions, ces cartes virtuelles de paiement valides peuvent alors être utilisées directement pour la réalisation d'un paiement électronique et ce, au contraire de cartes virtuelles de paiement non valides encore appelées cartes virtuelles de paiement passives. Effectivement, ces cartes virtuelles de paiement non valides ne peuvent être utilisées car elles ne sont liées à aucune carte de paiement physique. Pour que de telles cartes virtuelles de paiement non valides puissent être utilisées, cela requiert que l'objet portable 1 qui les archive, soit connecté au réseau Internet afin de mettre en œuvre une procédure de validation/attribution de telles cartes virtuelles auprès d'un tiers de confiance fournisseur de services de paiement afin qu'elles puissent être utilisées et donc être valides. On notera qu'une carte virtuelle de paiement valide devient une carte virtuelle de paiement utilisable encore appelée carte virtuelle de paiement active, dès lors qu'elle est sélectionnée et utilisée pour la réalisation d'un paiement électronique sans contact comme on le verra par la suite.

L'objet portable 1 archivant ces cartes virtuelles de paiement 2 peut être une technologie portable ou technologie mettable telle qu'un vêtement ou un accessoire comportant des éléments informatiques et électroniques avancés. Les technologies portables incluent notamment des montres électroniques, par exemple des montres connectées, des lunettes, des textiles ou encore des bijoux.

Un tel objet portable 1 comprend de manière non exhaustive et non limitative :
- un module de communication 4 en champ proche par exemple de type NFC
- une unité de traitement 3 ou microcontrôleur ;
- un dispositif de sélection 5 d'une carte virtuelle de paiement ;
- un dispositif de contrôle 6 du module de communication 4 ;
- un dispositif d'activation temporaire 7 du module de communication 4 ;
- un dispositif visuel et/ou sonore ;

Dans cet objet portable 1, le module de communication 4 comporte un microcircuit 8 encore appelé circuit imprimé plus connu sous l'acronyme anglais PCB pour « Printed Circuit Board ». Ce microcircuit 8 comprend deux bornes qui sont connectées aux extrémités d'une antenne 9 par exemple en forme de boucle. Ce microcircuit 8 comprend une puce électronique 17, par exemple une puce NFC, comprenant un élément sécurisé 18 susceptible d'archiver au moins une carte virtuelle de paiement valide qui peut être utilisée pour le paiement électronique. Cet élément sécurisé 18 également connu sous l'anglicisme « secure element » contient un processeur sécurisé, un élément de stockage et la mémoire d'exécution. Cet élément de stockage archive la pluralité de cartes virtuelles de paiement valides 2. Un tel élément sécurisé 18 permet d'assurer des transactions sécurisées en comprenant des applications qui s'appuient sur des clés sécurisées fonctionnant à l'intérieur de ce processeur sécurisé.

Ce module de communication 4 n'a pas besoin d'une alimentation électrique autonome et est destiné à communiquer automatiquement avec un lecteur dès que l'objet portable 1 en est approché. Le champ électromagnétique du lecteur génère un courant induit dans l'antenne 9 qui alimente l'unité 8 et lui permet d'émettre à son tour un signal via l'antenne 9. Ainsi qu'on le verra par la suite, cette puce électronique 17 archive ladite au moins une carte virtuelle de paiement valide sélectionnée par l'utilisateur et qui peut être utilisée par cet objet portable 1 pour la réalisation d'un paiement électronique.

L'unité de traitement 3 de cet objet portable 1 comprend des ressources matérielles et logicielles en particulier au moins un processeur coopérant avec des éléments de mémoire. Cette unité de traitement 3 est connectée au module de communication 4 en champ proche, au dispositif visuel et/ou sonore, au dispositif de sélection 5 et/ou aux dispositifs de contrôle et d'activation temporaire 7 du module de communication 4.

Dans cet objet portable 1, le dispositif visuel et/ou sonore est susceptible de diffuser des informations relatives à une identification de la carte virtuelle de paiement valide sélectionnée et à un état du module de communication 4 à savoir s'il est activé ou désactivé. Ce dispositif visuel et/ou sonore peut aussi diffuser des informations sur l'activation temporaire de ce module et aussi sur la durée restante de cette activation temporaire. Un tel dispositif visuel et/ou sonore peut comprendre une interface visuelle telle qu'un écran, une illumination ou encore des aiguilles, et une interface sonore telle qu'un haut-parleur, un buzzer et/ou un vibreur.

Lorsque cet objet portable 1 est une montre électronique, cette interface visuelle comprend :
- un écran agencé dans le cadran 16 de cette montre et/ou
- au moins un aiguille 12a, 12b susceptible de se déplacer et coopérant avec des index/appliques 13 compris sur un cadran 16, et/ou
- au moins un aiguille 12a, 12b susceptible de se déplacer et coopérant avec des index ou des numéros compris sur un réhaut de la montre et/ou
- au moins un aiguille 12a, 12b susceptible de se déplacer et coopérant avec les index et/ou des numéros 14 compris sur une lunette pivotante 10 de la montre, et/ou
- au moins un guichet aménagé dans le cadran 16 dans lequel une représentation graphique telle qu'un dessin ou encore un numéro peut être affichée.

Ainsi que nous l'avons évoqué, cet objet portable 1 archive dans l'élément sécurisé 18 de la puce électronique 17, les cartes virtuelles de paiement 2 valides. Lors de la réalisation d'un processus de paiement électronique, le dispositif de sélection 5 est alors sollicité par l'utilisateur de l'objet portable 1. Ce dispositif de sélection 5 comprend un organe de sélection mobile 10, 11 qui peut être manipulé par l'utilisateur de cet objet portable 1 dans les deux sens S visibles sur la figure 1, et au moins un capteur de position angulaire et/ou de déplacement angulaire de cet organe de sélection 10, 11. Dans cette configuration, ledit au moins un capteur est apte à transmettre à l'unité de traitement 3 des données de position angulaire et/ou de déplacement angulaire de l'organe de sélection 10, 11. A partir de ces données, l'unité de traitement 3 est apte à déterminer la carte virtuelle de paiement valide qui a été choisie par l'utilisateur. Cette unité de traitement 3 génère ensuite une instruction de sélection de la carte virtuelle de paiement valide qui est transmise à la puce électronique 17. A réception de cette instruction de sélection, l'élément sécurisé 18 transmet à une interface de communication de type NFC de la puce électronique 17 du microcircuit 8, la carte virtuelle de paiement valide 2 sélectionnée. Elle devient alors une carte de paiement virtuelle utilisable qui peut maintenant être employée pour réaliser un paiement électronique. On notera que cette interface de communication de la puce 17 est apte à échanger avec un lecteur tel qu'un terminal de paiement dans le cadre de la réalisation d'un paiement électronique sans contact.

Par ailleurs, sur la base des données de position angulaire et/ou de déplacement angulaire de l'organe de sélection 10, 11, cette unité de traitement 3 est apte à générer des instructions de diffusion d'information relatives à l'identifiant de la carte virtuelle de paiement valide 2 choisie, autrement dit la diffusion de l'identifiant de la carte virtuelle de paiement utilisable. De telles instructions de diffusion sont transmises par cette unité de traitement 3 au dispositif visuel et/ou sonore.

Dans l'optique d'améliorer la sécurité de cet objet portable 1, ce dernier comprend un dispositif de contrôle 6 du module de communication 4 et/ou un dispositif d'activation temporaire 7 du module de communication 4 qui participent chacun à éviter qu'un tiers malintentionné récupère à l'insu de l'utilisateur de l'objet portable 1, des informations relatives aux cartes virtuelles de paiement 2 valides et/ou de la carte virtuelle de paiement utilisable qui y sont archivées en utilisant à cet escient par exemple un émetteur récepteur. Dans cette configuration, on comprend que le module de communication 4 est par défaut désactivé et que son activation ne peut être réalisée qu'à partir de l'un ou l'autre de ces dispositifs de contrôle 6 ou d'activation temporaire 7 de ce module 4.

Ainsi que nous venons de l'évoquer, le dispositif de contrôle 6 est apte à activer et désactiver le module de communication 4. Pour ce faire, ce dispositif 6 comprend un organe de contrôle mobile 10, 11 et ledit au moins un capteur de position angulaire et/ou de déplacement angulaire évoqué précédemment. Cet organe de contrôle 10, 11 qui peut être manipulé par l'utilisateur dans les deux sens S visibles sur la figure 1, peut correspondre à la même pièce mobile de l'objet portable 1 que l'organe de sélection 10, 11 décrit auparavant. Dans cette configuration, lorsque l'organe de contrôle 10, 11 est manipulé, ledit au moins un capteur est alors apte à transmettre à l'unité de traitement 3 des données de position angulaire et/ou de déplacement angulaire relatives à cet organe 10, 11. Sur la base d'une analyse de ces données, l'unité de traitement 3 est alors apte à activer le module de communication 4 dès lors qu'elle détermine une séquence configurable attendue d'une ou de plusieurs positions angulaires et/ou d'un ou de plusieurs déplacements angulaires de cet organe de contrôle 10, 11. La désactivation du module de communication 4 peut aussi requérir la réalisation d'une telle séquence par l'organe de contrôle 10, 11, cette séquence pouvant être différente de celle effectuée pour l'activation du module de communication 4. Dans une variante, lors de cette désactivation du module de communication 4, il peut ne pas être nécessaire de réaliser une telle séquence, en effet l'organe de contrôle 10, 11 peut être simplement configuré dans une position angulaire prévue à cet effet ou décrire un déplacement angulaire prévu à cet effet. En complément, on notera qu'une durée de réalisation de cette séquence peut être configurée pour renforcer la sécurité de cet objet portable 1. En outre on comprend qu'une telle séquence correspond à un code d'identification de l'utilisateur.

Lors de l'activation ou de la désactivation du module de communication 4, le dispositif visuel et/ou sonore peut émettre un signal sonore et/ou visuel. De plus ce dispositif visuel et/ou sonore peut afficher notamment à tout moment l'état activé ou désactivé du module de communication 4.

Dans un exemple où l'objet portable 1 est une montre électronique, cet organe de contrôle peut être la lunette pivotante 10 qui est pourvue d'un marqueur principal 15. Lorsque l'utilisateur souhaite activer le module de communication 4 dans le cadre de la réalisation d'un paiement électronique, il peut alors réaliser une séquence de trois positions ou déplacements angulaires de la lunette 10 en alignant de manière successive le marqueur principal 15 de cette lunette 10 avec trois index ou appliques 13 correspondant aux heures prévues définies sur le cadran 16. Dès lors que le paiement électronique est effectué, la lunette 10 peut alors être configurée dans une position angulaire ou décrire un déplacement angulaire prévue à cet effet par exemple une position angulaire dans laquelle le marqueur principal 15 de cette lunette 10 est aligné avec l'index/appliques 13 correspondant à midi. Lors de l'activation et la désactivation du module de communication 4, l'interface sonore de la montre peut émettre un signal/message audio et l'interface visuelle de cette montre peut afficher l'état activé ou désactivé de ce module.

S'agissant du dispositif d'activation temporaire 7 du module de communication 4, il comprend un organe d'activation mobile 10, 11 et ledit au moins un capteur de position angulaire et/ou de déplacement angulaire évoqué précédemment. Dans ce contexte, on comprend que ce dispositif 7 est donc prévu pour activer le module de communication 4 uniquement pendant une durée donnée qui est configurable. Cette durée configurable doit de préférence correspondre sensiblement au temps nécessaire à la réalisation d'un paiement électronique. Dans cet objet portable 1, l'organe d'activation 10, 11 qui peut être manipulé par l'utilisateur dans les deux sens S visibles sur la figure 1, peut correspondre à la même pièce mobile que l'organe de sélection 10, 11 ou encore que l'organe de contrôle 10, 11 décrit auparavant. Dès lors et de la même manière, lorsque l'organe d'activation 10, 11 est manipulé, ledit au moins un capteur est alors apte à transmettre à l'unité de traitement 3 des données de position angulaire et/ou de déplacement angulaire relatives à cet organe d'activation 10, 11. Sur la base de ces données, l'unité de traitement 3 est alors apte à activer temporairement le module de communication 4 dès lors qu'elle identifie une séquence attendue d'une ou de plusieurs positions et/ou d'un ou de plusieurs déplacements angulaires de cet organe d'activation 10, 11. On notera qu'une durée de réalisation de cette séquence peut être configurée pour renforcer la sécurité de cet objet portable 1. En outre, on remarquera qu'une telle séquence correspond à un code d'identification de l'utilisateur qui permet ainsi d'activer temporairement le module de communication 4.

Dans une variante, le dispositif d'activation temporaire 7 comprend uniquement l'organe d'activation 10, 11. Dans ces conditions, cet organe 10, 11 peut être alors un bouton poussoir compris dans l'objet portable 1 et qui est apte à générer un signal d'activation temporaire lorsqu'il est actionné par l'utilisateur. Ce signal généré est reçu par l'unité de traitement 3 qui transmet par la suite une instruction d'activation temporaire au module de communication 4.

Lors de l'activation temporaire du module de communication 4, le dispositif visuel et/ou sonore peut émettre un signal sonore et/ou visuel. De plus ce dispositif visuel et/ou sonore peut diffuser un message visuel et/ou sonore relatif à l'état activé du module de communication 4 ainsi que le temps restant avant sa désactivation et aussi par la suite son état désactivé.

En outre, on notera que lorsque l'objet portable est une montre électronique l'organe de sélection 10, 11, l'organe de contrôle 10, 11 et l'organe d'activation temporaire 10, 11 peuvent correspondre chacun aussi à une couronne 11.

Par ailleurs, on notera que lorsque l'objet portable 1 peut être une montre mécanique c'est-à-dire dépourvu d'une alimentation électrique du type batterie. Dans cette configuration, l'unité de traitement 3 qui est connectée aux dispositifs de sélection 5, de contrôle 6 et d'activation temporaire 7, est comprise dans le microcircuit 8 du module de communication 4 en champ proche. En étant ainsi compris dans le microcircuit 8, cette unité de traitement 3 est alimentée électriquement dès lors qu'un lecteur du type terminal de paiement est approché de l'objet portable 1 par exemple dans le cadre de la réalisation d'un paiement électronique sans contact. Ainsi dans ce contexte, dès lors que le microcircuit 8 est alimenté la position angulaire et/ou de déplacement angulaire des organes de sélection, de contrôle et/ou d'activation temporaire sont déterminées selon le principe décrit précédemment et par conséquent l'identification de la carte virtuelle de paiement valide sélectionnée. En outre on notera que l'état actif ou passif du module de communication 4 et/ou l'identifiant de la carte virtuelle de paiement valide sélectionnée qui devient la carte virtuelle de paiement utilisable peuvent être transmis par cette unité de traitement 3 au dispositif visuel et/ou sonore qui peut être ici des diodes électroluminescentes.

## Revendications

1. Objet portable (1) de paiement sans contact apte à participer à la réalisation d'un paiement électronique, ledit objet portable (1) comprenant une unité de traitement (3) et un module de communication (4) en champ proche archivant une pluralité de cartes virtuelles de paiement (2) valides ainsi qu'un dispositif de sélection (5) d'une de ces dites cartes virtuelles de paiement (2) valides utilisée comme une carte virtuelle de paiement utilisable pour la réalisation dudit paiement électronique, ledit objet portable (1) comprenant aussi :
- un dispositif de contrôle (6) du module de communication (4) configuré pour activer ou désactiver ledit module de communication (4) et comprenant un organe de contrôle mobile (10, 11) et au moins un capteur de position angulaire et/ou de déplacement angulaire,
- un dispositif d'activation temporaire (7) du module de communication (4) configuré pour activer ce module de communication (4) dans une durée configurable et comprenant un organe d'activation temporaire mobile, le module de communication (4) étant par défaut désactivé et son activation ne pouvant être réalisée qu'à partir de l'un ou l'autre de ces dispositifs de contrôle (6) ou d'activation temporaire (7) de ce module de communication (4), un organe de sélection du dispositif de sélection (5), l'organe de contrôle mobile (10, 11) et l'organe d'activation temporaire dudit objet portable (1) correspondant à une même pièce mobile de cet objet portable (1), un tel dispositif de contrôle (6) étant apte à activer et désactiver ce module de communication (4) lorsque cet organe de contrôle mobile (10, 11) est manipulé, ledit au moins un capteur étant alors apte à transmettre à l'unité de traitement (3) des données de position angulaire et/ou de déplacement angulaire relatives à cet organe de contrôle mobile (10, 11) et sur la base d'une analyse de ces données, l'unité de traitement (3) étant alors apte à activer le module de communication (4) dès lors qu'elle détermine une séquence configurable attendue de plusieurs positions angulaires et/ou déplacements angulaires de cet organe de contrôle mobile (10, 11).

2. Objet portable (1) selon la revendication précédente, **caractérisé en ce que** les dispositifs de sélection (5) et d'activation temporaire (7) dudit objet portable (1) comprennent chacun au moins un capteur de position angulaire et/ou de déplacement angulaire de respectivement l'organe de sélection, et l'organe d'activation temporaire.

3. Objet portable (1) selon l'une quelconque des revendications précédentes, **caractérisé en ce qu'**il est une montre électronique notamment une montre connectée.

4. Objet portable (1) selon l'une quelconque des revendications 1 à 2, **caractérisé en ce qu'**il est une montre mécanique dans laquelle l'unité de traitement (3) est compris dans le module de communication (4).

5. Objet portable (1) selon la revendication précédente, **caractérisé en ce que** l'organe de sélection, l'organe de contrôle et l'organe d'activation temporaire comprennent chacun une lunette pivotante (10) ou une couronne (11).

6. Objet portable (1) selon l'une quelconque des revendications précédentes, **caractérisé en ce que** l'unité de traitement (3) est connectée aux dispositifs de sélection (5), de contrôle (6) et d'activation temporaire (7) dudit objet portable (1).

7. Objet portable (1) selon l'une quelconque des revendications précédentes, **caractérisé en ce qu'**il est apte à participer à la réalisation d'un paiement électronique par tokenisation.

8. Objet portable (1) selon l'une quelconque des revendications précédentes, **caractérisé en ce qu'**il comprend un dispositif visuel et/ou sonore susceptible de diffuser un signal ou un message relatif à :
- une identification de la carte virtuelle de paiement valide sélectionnée, et/ou
- une activation du module de communication (4), et/ou
- une désactivation du module de communication (4), et/ou
- une activation temporaire du module de communication (4), et/ou
- une durée restante de l'activation temporaire du module de communication (4), et/ou
- un état d'activation ou de désactivation du module de communication (4).

## Patentansprüche

1. Mobiles Gerät (1) für kontaktloses Bezahlen, der zur Durchführung einer elektronischen Zahlung geeignet ist, wobei das genannte tragbare Objekt (1), eine Bearbeitungseinheit (3) und ein Nahfeld-Kommunikationsmodul (4) umfasst, das eine Vielzahl gültiger virtueller Zahlungskarten (2) speichert, sowie eine Auswahlvorrichtung (5) einer dieser gültigen virtuellen Zahlungskarten (2), die als virtuelle Zahlungskarte verwendet wird, um die elektronische Zahlung durchzuführen, wobei das tragbare Objekt (1) außerdem umfasst:
- eine Steuerungsvorrichtung (6) des Kommunikationsmoduls (4), die so konfiguriert ist, dass sie das Kommunikationsmodul (4) aktiviert oder deaktiviert, und die ein bewegliches Steuerungsorgan (10, 11) und mindestens einen Winkelpositions- und/oder Winkelverschiebungssensor umfasst,
- eine Vorrichtung zur temporären Aktivierung (7) des Kommunikationsmoduls (4), die konfiguriert ist, dass sie dieses Kommunikationsmodul (4) für eine konfigurierbare Dauer zu aktivieren, einschließlich eines beweglichen temporären Aktivierungsorgans,
wobei das Kommunikationsmodul (4) standardmäßig deaktiviert ist und seine Aktivierung nur über eine der beiden Vorrichtungen zur Steuerung (6) oder vorübergehenden Aktivierung (7) dieses Kommunikationsmoduls (4) erfolgen kann,
ein Auswahlorgan für die Auswahlvorrichtung (5), das bewegliche Steuerungsorgan (10, 11) und das Organ zur vorübergehenden Aktivierung dieses mobilen Geräts (1), das demselben beweglichen Teil dieses mobilen Geräts entspricht (1), wobei ein solches Steuerungsorgan (6) in der Lage ist, dieses Kommunikationsmodul (4) zu aktivieren und zu deaktivieren, wenn dieses mobile Steuerungsorgan (10, 11) betätigt wird, wobei vom genannten mindestens ein Sensor in der Lage ist, die Daten der Winkelposition und/oder der Winkelverstellung zu diesem mobilen Steuerungsorgan an die Bearbeitungseinheit (3) zu übertragen (10, 11) und auf der Grundlage einer Analyse dieser Daten, die Bearbeitungseinheit (3) dann in der Lage ist, das Kommunikationsmodul (4) zu aktivieren, sobald sie eine konfigurierbare Sequenz von mehreren Winkelpositionen und/oder Winkelverschiebungen dieses mobilen Steuerungsorgans (10, 11) ermittelt.

2. Mobiles Gerät (1) gemäß dem vorhergehenden Anspruch, **dadurch gekennzeichnet, dass** die Auswahlvorrichtungen (5) und die Vorrichtungen zur vorübergehenden Aktivierung (7) dieses mobilen Geräts (1) jeweils mindestens einen Winkelpositions- und/oder Winkelverschiebungssensor des jeweiligen Auswahlorgans bzw. des temporären Aktivierungsorgans besitzen.

3. Mobiles Gerät (1) gemäß einem der vorstehenden Ansprüche, **dadurch gekennzeichnet, dass** es sich um eine elektronische Uhr, insbesondere eine vernetzte Uhr, handelt.

4. Mobiles Gerät (1) gemäß einem der vorstehenden Ansprüche 1 bis 2, **dadurch gekennzeichnet, dass** es sich um eine mechanische Uhr handelt, bei der die Bearbeitungseinheit (3) im Kommunikationsmodul (4) enthalten ist.

5. Mobiles Gerät (1) gemäß dem vorstehenden Anspruch, **dadurch gekennzeichnet, dass** das Auswahlorgan, das Steuerungsorgan und das temporäre Aktivierungsorgan jeweils eine drehbare Lünette (10) oder eine Krone (11) besitzen.

6. Mobiles Gerät (1) gemäß einem beliebigen der vorhergehenden Ansprüche, **dadurch gekennzeichnet, dass** die Bearbeitungseinheit (3) mit den Auswahlvorrichtungen (5), den Steuerungsvorrichtungen (6) und den Vorrichtungen zur zeitweisen Aktivierung (7) dieses mobilen Geräts (1) verbunden ist.

7. Mobiles Gerät (1) gemäß einem der vorstehenden Ansprüche, **dadurch gekennzeichnet, dass** es zur Durchführung einer elektronischen Zahlung durch Tokenisierung geeignet ist.

8. Mobiles Gerät (1) gemäß einem der vorstehenden Ansprüche, **dadurch gekennzeichnet, dass** es eine visuelle und/oder akustische Vorrichtung umfasst, die ein Signal oder eine Meldung in Bezug auf Folgendes ausgeben kann: - eine Identifizierung der ausgewählten gültigen virtuellen Kreditkarte und/oder
- eine Aktivierung des Kommunikationsmoduls (4) und/oder
- eine Deaktivierung des Kommunikationsmoduls (4) und/oder
- eine vorübergehende Aktivierung des Kommunikationsmoduls (4) und/oder
- die verbleibende Zeit der vorübergehenden Aktivierung des Kommunikationsmoduls (4) und/oder
- einen Status der Aktivierung oder Deaktivierung des Kommunikationsmoduls (4).

## Claims

1. A portable contactless payment object (1) that can be used for making electronic payments, said portable object (1) comprising a processing unit (3) and a near-field communication module (4) storing a plurality of valid virtual payment cards (2) as well as a device (5) for selecting one of said valid virtual payment cards (2) used as a virtual payment card that can be used to make said electronic payments, said portable object (1) also comprising:
- a device (6) for controlling the communication module (4), configured to activate or deactivate said communication module (4) and comprising a mobile control organ (10, 11) and at least one angular position sensor and/or angular displacement sensor,
- a device (7) for temporarily activating the communication module (4), configured to activate this communication module (4) within a
configurable time period and comprising a mobile temporary activation organ,
the communication module (4) being deactivated by default and its activation only being possible from one or the other of said control device (6) or temporary activation device (7) in this communication module (4),
an organ for selecting the selection device (5), the mobile control organ (10, 11) and the organ for temporarily activating said portable object (1) corresponding to the same mobile part on this portable object (1), such a control device (6) being able to activate and deactivate this communication module (4) when this mobile control organ (10, 11) is manipulated, said at least one sensor then being capable of transmitting to the processing unit (3) angular position and/or angular displacement data relating to said mobile control organ (10, 11) and on the basis of an analysis of said data, the processing unit (3) then being capable of activating the communication module (4) as soon as it determines an expected configurable sequence of several angular positions and/or angular displacements of said mobile control organ (10, 11).

2. The portable object (1) according to the preceding claim, **characterised in that** the selection device (5) and the temporary activation device (7) on said portable object (1) each comprise at least one sensor for the angular position and/or angular displacement of the selection organ and the temporary activation organ, respectively.

3. The portable object (1) according to any of the preceding claims, **characterised in that** it is an electronic watch, in particular a smartwatch.

4. The portable object (1) according to any of claims 1 to 2, **characterised in that** it is a mechanical watch in which the processing unit (3) is comprised in the communication module (4).

5. The portable object (1) according to the preceding claim, **characterised in that** the selection organ, the control organ and the temporary activation organ each comprise a pivoting bezel (10) or a crown (11).

6. The portable object (1) according to any of the preceding claims, **characterised in that** the processing unit (3) is connected to the selection device (5), the control device (6) and the temporary activation device (7) on said portable object (1).

7. The portable object (1) according to any of the preceding claims, **characterised in that** it can be used for electronic payment tokenization.

8. The portable object (1) according to any of the preceding claims, **characterised in that** it comprises a visual and/or audio device for transmitting a signal or message relating to: - the identification of the selected valid virtual payment card, and/or
- the activation of the communication module (4), and/or
- the deactivation of the communication module (4), and/or
- the temporary activation of the communication module (4), and/or
- the remaining temporary activation time of the communication module (4), and/or
- the activated or deactivated state of the communication module (4).
